(19) Europäisches Patentamt

European Patent Office

Office européen des brevets

(11) **EP 0 635 741 B1**

(12) **EUROPEAN PATENT SPECIFICATION**

(45) Date of publication and mention
of the grant of the patent:
**13.11.2002   Bulletin 2002/46**

(51) Int Cl.⁷: **G02B 6/42**

(21) Application number: **94109901.2**

(22) Date of filing: **27.06.1994**

(54) **Optoelectronic interface and method of making**

Optoelektronische Überbrückung und Verfahren zu ihrer Herstellung

Interface optoélectronique et procédé de sa fabrication

(84) Designated Contracting States:
**DE FR GB**

(30) Priority: **19.07.1993   US 95453**

(43) Date of publication of application:
**25.01.1995   Bulletin 1995/04**

(73) Proprietor: **MOTOROLA, INC.**
**Schaumburg, IL 60196 (US)**

(72) Inventors:
• **Lebby, Michael S.**
**Apache Junction, Arizona 85219 (US)**
• **Hartman, Davis H.**
**Phoenix, Arizona 85044 (US)**
• **Chun, Christopher K.Y.**
**Gilbert, Arizona 85233 (US)**

• **Kuo, Shun-Meen**
**Chandler, Arizona 85226 (US)**

(74) Representative: **Hudson, Peter David et al**
**Motorola,**
**European Intellectual Property,**
**Midpoint,**
**Alencon Link**
**Basingstoke, Hampshire RG21 7PL (GB)**

(56) References cited:
**EP-A- 0 010 352**        **EP-A- 0 053 483**
**EP-A- 0 413 489**        **DE-A- 3 508 627**
**FR-A- 2 178 173**

• **PATENT ABSTRACTS OF JAPAN vol. 005 no.**
**011 (E-042) ,23 January 1981 & JP-A-55 138891**
**(FUJITSU LTD) 30 October 1980,**

## Description

Background of the Invention

This invention relates, in general, to fabrication of an optical device and, more particularly, to the fabrication of an optoelectronic interface.

This application is related to U. S. Patent have U. S. Patent No. 5,265,184 issued on November 23, 1932; that bears serial number 07/889,335, entitled MOLDED WAVEGUIDE AND METHOD OF MAKING SAME, and was filed on May 28, 1992.

At present, coupling of an optical fiber having a core region to a photonic device is a difficult task that typically is achieved by either a manual method or a semi-automatic method. Generally, both the manual and the semi-automated methods are complex, inefficient, and are not suitable for high volume manufacturing.

A major problem associated with the coupling of the optical fiber to the photonic device is alignment of a working portion of the photonic device to the core region of the optical fiber. Moreover, it should be pointed out that the working portion of the optical fiber generally is required to be not only perpendicular, but also to be within an area described by the working portion of the photonic device so as to allow light that is either transmitted or received by the photonic device to be efficiently and effectively coupled to the core region of the optical fiber, thus necessitating extremely tight or restrictive alignment tolerances between the working portion of the photonic device and the core region of the optical fiber.

Presently, coupling of the working portion of the photonic device and the core region of the optical fiber typically is achieved by actively aligning both the photonic device and the optical fiber. For example, with the photonic device being a laser and with the optical fiber having an optical detector coupled to one end of the optical fiber having an optical detector coupled to one end of the optical fiber, the laser is activated and the other end is carefully moved or adjusted until the core region of the optical fiber is aligned to the working portion of the laser so that a maximum amount of light is captured by the core region of the optical fiber as indicated by the photodetector. However, many problems arise by aligning the photonic device and the core region of the optical fiber by active alignment, such as being extremely labor intensive, being costly, having a potential of poor accuracy of the alignment, and the like. Further, if the misalignment is severe enough, unsuitable product is manufactured, thus increasing costs and reducing manufacturing capacity. It should be understood that having the aforementioned problems are not amenable to a high volume manufacturing environment.

It can be readily seen that the present methods for aligning a photonic device to an optical fiber have severe limitations. Also, it is evident that the present fabrication methods or interconnection methods for a coupling a photonic device to the optical fiber are not only complex and expensive, but also not amenable to high volume manufacturing. Therefore, an article and a method for interconnecting or coupling a photonic device to an optical fiber that is cost effective, simplistic, and manufacturable in a high volume manufacturing setting is highly desirable.

Optical interfaces showing an encapsulated optoelectronic device coupled to fibre are known form EP 0 053 483 A and JP 55-138891 A.

## Summary of the Invention

In accordance with the invention, there is provided an optoelectronic interface as defined in claim 1.

Briefly stated, an embodiment provides an optoelectrical interface and a method of making same are provided. An interconnect substrate having a surface with a plurality of electrical tracings disposed on the surface of the interconnect substrate is provided. A photonic device having a working portion and having a contact electrically coupled to one of the plurality of electrical tracings is disposed on the interconnect substrate. A molded optical portion that encapsulates the photonic device is formed. The molded optical portion forms a surface for directing light between the photonic device and an optical fiber. An alignment apparatus is formed in the molded optical portion for position of the optical fiber to the working portion of the photonic device.

An advantage of an embodiment of the present invention is to relax alignment tolerances between a working portion of a photonic device and a core region of an optical fiber.

Another advantage of an embodiment of the present invention is to provide a optoelectronic interface that is highly manufacturable.

## Brief Description of the Drawings

FIG. 1 is a highly enlarged simplified diagrammatic partial cross-sectional illustration of an optoelectronic interface module;

FIG. 2 is a highly enlarged simplified partial cross-section portion of the optoelectronic interface module shown in FIG. 1; and

FIG. 3 is an enlarged perspective view of an optoelectronic interface module.

## Detailed Description of the Drawings

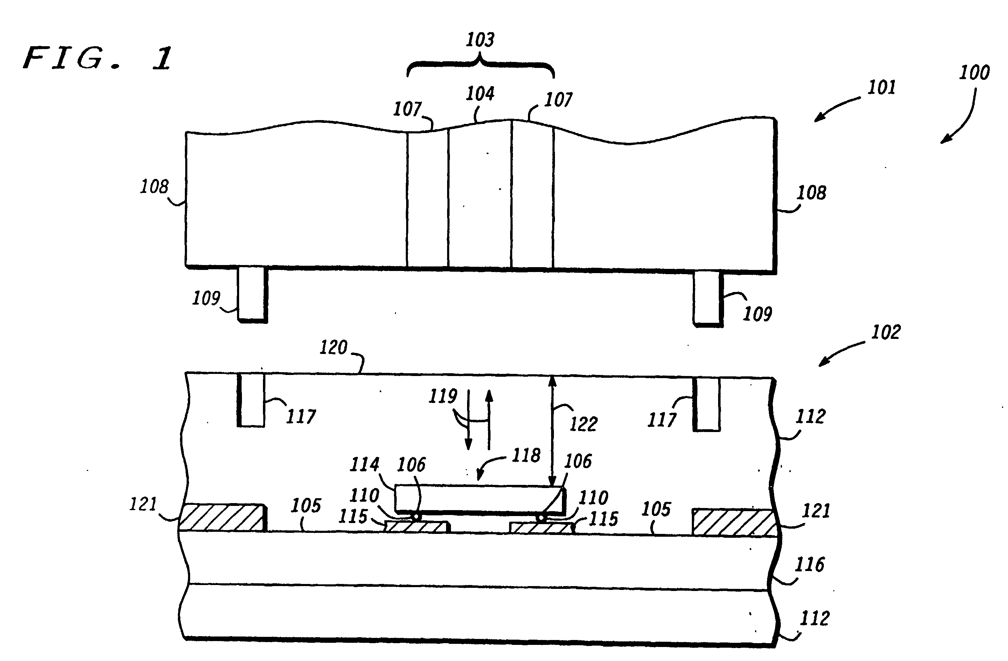

FIG. 1 shows an enlarged simplified diagrammatic partial cross-sectional illustration of an optoelectronic interface module 100. Additionally, optical connector 101 illustrated in cross-sectional view reveals an optical fiber 103 having a core region 104 and a cladding region 107, a body 108, and alignment devices 109. Further, optoelectronic device 102, illustrated in cross-sectional view, reveals a molded optical portion 112, an optical surface 120, a photonic device 114, electronic tracings 115, an interconnect substrate 116, and alignment devices 117. It should be understood that FIG. 1 is a partial cross-sectional view and that optoelectronic interface module 100 can extend not only into and out of the drawing but also laterally across the drawing. Additionally, while only a single optical fiber 103 and a single photonic device 114 are shown in FIG. 1, it should be understood that arrays of optical fibers, lens devices, and photonic devices are capable of being present in optoelectronic interface module 100. In the present invention, a novel combination of elements and processes are described that allow for accurate and efficient interconnection or coupling of optical fiber 103 to a working portion 118 of photonic device 114 through optical portion 112.

Generally, interconnect substrate 116 is capable of being any suitable well-known interconnect substrate, such as a printed circuit board, a ceramic interconnect substrate, a printed wire board, or the like. Typically, interconnect substrate 116 provides a surface 105 having a plurality of electrical conductive pathways or electrical tracings, represented by electrical tracings 115, that interconnect a variety of electrical components (not shown), such as integrated circuits, resistors, capacitors, and the like to members 121 and photonic device 114, thereby electrically coupling the variety of electrical components to photonic device 114.

Members 121 are capable of being any suitable input and output apparatus, such as lead frame members, wire bond connections, electrically conductive bumps, or the like. However, in a preferred embodiment of the present invention, lead frame members are used to input and output electrical signals to and from optoelectronic device 102. For example, lead frame members are electrically and mechanically coupled to electrical tracing 115 and subsequently overmolded, thereby securing members 121 and electrical tracings 115. Further, it should be understood that members 121 are operably coupled to electrical tracings 115, thereby enabling electrical signals to be inputted and outputted through electrical tracings 115.

Photonic device 114 is capable of being either a photo-transmitter or a photo-receiver that either emits light or receives light, respectively, as indicated by arrows 119. When photonic device 114 is a photo-transmitter, the photo-transmitter is capable of being any suitable light emitting device, such as a light emitting diode (LED), a vertical cavity surface emitting laser (VCSEL), or the like. Additionally, when photonic device 114 is a photo-receiver, photonic device 114 is capable of being any suitable light receiving device, such as a photodiode, a p-i-n photodiode, or the like. However, in a preferred embodiment of the present invention, when photonic device 114 is a photo-transmitter, and when photonic device 114 is a photo-receiver, photonic device 114 is either a vertical cavity surface emitting laser (VCSEL) or a p-i-n photodiode, respectively.

Generally, photonic device 114 is made separately and subsequently electrically and mechanically joined to electrical tracings 115 through contacts 106 by any suitable method, such as manually, semi-automatically, or fully automatically. In a preferred embodiment of the present invention, photonic device 114 is joined or mounted to electrical tracings 115 using an automatic system such as a robotic arm (not shown), thereby ensuring precise and accurate placement or mounting of photonic device 114 on tracings 115.

Generally, molded optical portion 112 is made utilizing the teachings of U. S. Patent having U. S. Patent No. 5,265,184 issued November 23, 1993, that bears serial number 07/889,335, titled MOLDED WAVEGUIDE AND METHOD OF MAKING SAME, and was filed on May 28, 1992.

Briefly, molded optical portion 112 is made of any suitable optical material such as plastics, epoxies, polymers, or the like. In the present invention, prepared interconnect substrate 116, having photonic device 114 mounted thereon and members 121 operably coupled to electrical tracings 115, is placed into a molding system (not shown) and overmolded with molded optical portion 112, thereby encapsulating photonic device 114. Once the molding process is completed, molded optical portion 112 is formed or molded with optical surface 120 having a distance or a height 122 between surface 120 and working portion 118, represented by arrow 122.

Moreover, it should be understood that additional processing is sometimes carried out on optical surface 120 to enhance optical performance of optical surface 120. For example, optical surface 120 is capable of being polished so as to make optical surface 120 more transparent, thereby increasing the transmission of light 119 through optical surface 120. Further, optical surface 120 is capable of being polished or lapped to remove a portion of optical portion 112 of optical surface 120 so as to adjust the distance or the height 122 between optical surface 120 and working portion 118 of photonic device 114.

Materials used for optical portion 112 are optically clear with refractive indexes that are similar to refractive indexes of optical fiber 103, thereby allowing light 119 to pass through optical surface 120. However, while refractive index of optical portion 112 is capable of including the range of refractive indexes of optical fiber 103, in a preferred embodiment of the present invention, refractive index of optical portion 112 is similar or matches the refractive index of that of core region 104. By molding optical portion 112 and forming optical surface 120 light 119 is guided directly from either working portion 118 of photonic device 114 to core region 104 or from core region 104 to working portion 118 through optical portion 112. However, it should be understood that optimization of several parameters, such as height or distance 122, refractive indexes of optical components (e.g., optical fiber 103, optical portion 112), size of working portion 118 of photonic device 114, and the like need to be considered so as to provide the proper physical dimensions to optimize performance of optoelectronic interface 100. Further, alignment devices 117 are made by any suitable method, such as molding, milling, or the like. However, in a preferred embodiment of the present invention, alignment devices 117 are molded simultaneously with optical portion 112, thereby providing accurate and precise alignment or placement of alignment devices 117 in relation to each other.

Electrical signals that either stimulate working portion 118 of photonic device 114 or electrical signals that are elicited from light stimulating working portion 118 of photonic device 114 are sent through conductive tracks 115. As previously indicated, conductive tracks 115 are made by any suitable well-known method in the art. The electrical signals are then passed through conductive bumps 110 that are made by any suitable method well known in the art, such as solder bumps, gold bumps, conductive epoxy bumps, or the like. However, in a preferred embodiment of the present invention, gold bumps are used to provide a secure mechanical and electrical connection between electronic tracings 115 and photonic device 114.

Optical connector 101 is made such that optical fiber 103 is held in a fixed position in relation to alignment devices 109, thereby providing a spatial orientation between core region 104 and alignment devices 109. Further, alignment devices 109 are positioned such that alignment devices 109 are capable of engaging alignment devices 117 of molded optical portion 112. In a preferred embodiment of the present invention, alignment devices 109 are detachably engaged with alignment devices 117 of molded optical portion 112, thereby aligning core region 104 to working portion 118 of photonic device 114. In the present invention, alignment of both core region 104 of optical fiber 103 and alignment of photonic device 114 are substantially relaxed, thereby providing a more manufacturable optoelectronic interface device 100 that does not require active alignment.

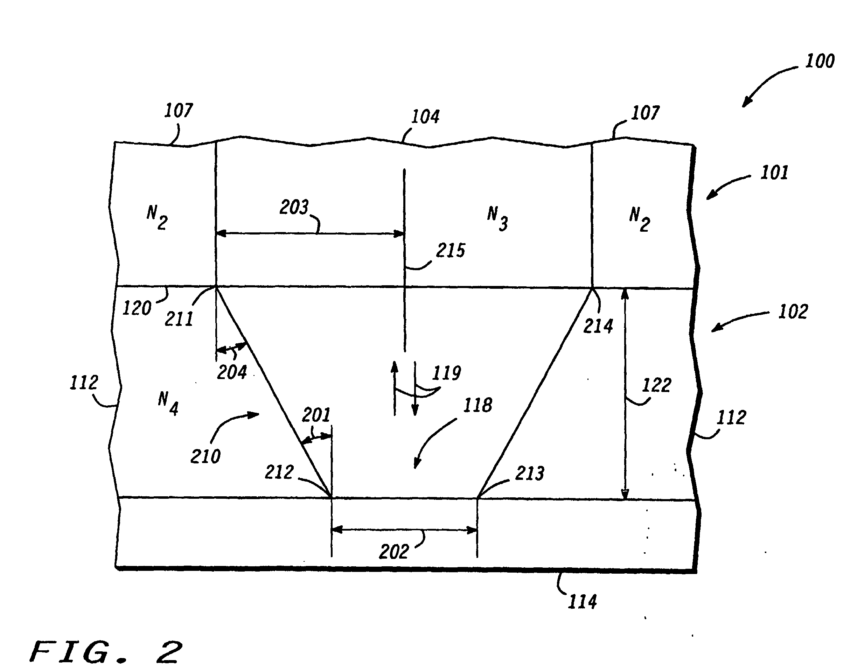

Regarding FIG. 2, a highly enlarged simplified diagrammatic partial cross-sectional portion of optoelectronic interface module 100 is illustrated. It should be understood that features having similar or identical functions as illustrated in FIG. 1 will retain their original identifying numerals. As illustrated in FIG. 2, optical connector 101 is mated to optoelectronic device 102, thereby bring core region 104 in alignment with working portion 118 of photonic device 114 and optically coupling working portion 118 and core region 104.

In order to optimize optical coupling of light 119 between core region 104 and working portion 118, a distance or a height 122 is determined. Determination of distance or height 122 is achieved by solving the following mathematical inequality:

$$h \leq \frac{x - \frac{d}{2}}{\tan \theta_{2c}}$$

where $h$ is equal to distance or height 122 between surface 120 and working portion 118, where $\theta_{2c}$ (represented by arc 201 and 204) is equal to a critical angle or an acceptance angle, where $d$ is equal to a width or a distance 202 of working portion 118 of photonic device 114, and where $x$ is equal to one half of a desired spot size, represented by arrow 203 on optical surface 120. Further, it should be understood, for purpose of illustration only, that geometric configuration of working portion 118 describes a circle, thus x is a radius of the circle. Additionally, with values for d and x known or selected, respectively, only acceptance angle $\theta_{2c}$ needs to be further defined.

Acceptance angle or critical angle $\theta_{2c}$ is determined by solving the following mathematical inequality:

$$\theta_{2c} \leq \sin^{-1}\left[\frac{n_3}{n_4}\cos\left(\sin^{-1}\left(\frac{n_2}{n_3}\right)\right)\right]$$

Refractive indexes of core region 104, cladding region 107, and optical portion 112 are well-known material constants that are identified as $n_3$, $n_2$, and $n_4$ respectively. Solving for $\theta_{2c}$ results in determination of acceptance angle $\theta_{2c}$, represented by arcs 201 and 204. Acceptance angle $\theta_{2c}$ determines an angle in which light is capable of being coupled between working portion 118 and core region 104. It should be understood that angle $\theta_{2c}$ represents an acceptance cone 210 that is defined by points 211, 212, 213, and 214 that rotate about an optical axis 215.

With acceptance angle $\theta_{2c}$ having been determined or calculated by the previously described equation, with values for refractive indexes, with distance 202 known, and with X, represented by arrow 203, known, substitution of these values into the first described equation is performed to determine height or distance 122.

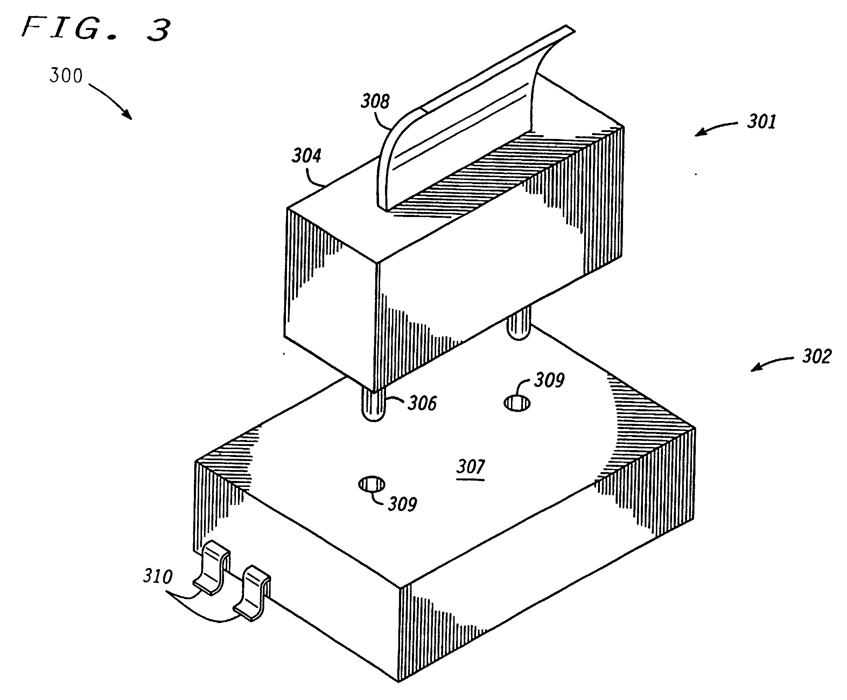

FIG. 3 is an enlarged perspective view of an optoelectronic interconnect module 300. Optoelectronic interface module 300 includes optical connector 301 and optoelectronic interface device 302. As can be seen in FIG. 3, optical connector 301 is made having a plurality of optical fibers (not shown) formed in an optical cable 308 that are held or fixed and positioned by a body 304 in such a manner that a plurality of core regions (not shown) of the plurality of optical fibers are exposed so as to be able to be operably coupled to photonic devices (not shown) in optoelectronic interface device 302. Further, optical connector 301 is made with alignment devices 306 (only one is shown), thereby fixing spatial orientation of the plurality of core regions in relation to body 304. Insertion of alignment devices 306 into molded optical devices 309 aligns the plurality of core regions to the plurality of working portion of the plurality of photonic devices in optoelectronic interface device 302.

Optoelectronic interface device 302 is made in a similar manner as has been described hereinabove. Engagement of alignment devices 306 with alignment devices 309 aligns the plurality of core regions in fiber optic cable 308 with the plurality of photonic devices in optoelectronic interface device 302 such that the plurality of core regions are operably or optically engaged to the plurality of photonic devices so to pass light thought surface 307 and into and out of optoelectronic interface device 302. Additionally, output members 310 are seen extending from optoelectronic interface device 302. These output members 310 are then capable of being further electrically interconnected to other electronic components or systems, such as printed circuit boards, computer boards, or the like.

By now it should be appreciated that a novel optoelectronic interface device and method of making same have been described. The optoelectronic interface device incorporates an optical portion that encapsulates a photonic device such that optical fibers in the optical connector and the working portion of the photonic device are operably coupled. Further, use of the optoelectronic interface device relaxes alignment tolerances that results in a cost effective method of manufacturing. Additionally, the method of making the optoelectronic interface device allows for the incorporation of standard electronic components with photonic devices in a highly manufacturable process.

**Claims**

1. An optoelectronic interface for a fibre having a core region (104) and a cladding region (107) **characterized by**:

   an interconnect substrate (116) having a surface (105) with a plurality of electrical tracings (115) disposed on the surface (105) of the interconnect substrate (116);
   a photonic device (114) being mounted to said surface and having a working portion (118), the photonic device (114) including a contact (106) electrically coupled to at least one of the plurality of electrical tracings (115) of the interconnect substrate (116); and
   a molded optical portion (112) encapsulating the photonic device (114), the molded optical portion (112) forming an outer surface (120) having alignment devices (117) molded therein, the alignment devices (117) being molded simultaneously with the optical portion (112), thereby providing accurate alignment of the optical portion (112), thereby providing accurate alignment of the alignment devices (117) with each other and the surface (120), and further having a distance h (122) between the outer surface (120) and the working portion (113) of the photonic device (114) for directing light (119) between the photonic device (114) and the outer surface (120) of the molded optical portion (112), wherein the distance (h) is determined by the following mathematical inequality:

$$h \leq \frac{x - \frac{d}{2}}{\tan\theta_{2c}}$$

where $h$ is equal to the distance (122) between the surface (105) and the working portion (118), where $d$ is equal to a width of the working portion, where $x$ is equal to one half of a desired spot size, and where $\theta_{2c}$ is determined using the refractive index of the molded optical portion with $\theta_{2c}$ is satisfying the following mathematical inequality:

$$\theta_{2c} \leq \sin^{-1}\left[\frac{n_3}{n_4}\cos\left(\sin^{-1}\left(\frac{n_2}{n_3}\right)\right)\right]$$

where $n_3$, $n_2$, and $n_4$ are refractive indexes of the core region (104), the cladding region (107), and the molded optical portion (112), respectively, thereby determining $\theta_{2c}$.

2. An optoelectronic interface as claimed in claim 1 further **characterized by** the photonic device (114) is an optical transmitter.

3. An optoelectronic interface as claimed in claim 2 further **characterized by** the optical transmitter is an VCSEL.

4. An optoelectronic interface as claimed in claim 2 further **characterized by** the optical transmitter is an LED.

5. An optoelectronic interface as claimed in claim 1 further **characterized by** the photonic device (114) is an optical receiver.

6. An optoelectronic interface as claimed in claim 5 further **characterized by** the optical receiver is an photo diode.

7. An optoelectronic interface as claimed in claim 6 further **characterized by** the photo diode is a p-i-n photo diode.

8. An optoelectronic interface as claimed in claim 1 further **characterized by** the interconnect substrate (116) further includes an integrated circuit operably connected the electrical tracings.

9. An optoelectronic interface as claimed in claim 1 further **characterized by** comprising :

an optical connector (101) having an optical fiber (103) with a core region (104) and a cladding region (107).

**Patentansprüche**

1. Optoelektronische Koppeleinheit für eine Faser mit einem Kernbereich (Core) (104) und einem Mantelbereich (Cladding),

**gekennzeichnet durch**:

einen Koppler-Trägerkörper (116) mit einer Oberfläche (105) mit einer Mehrzahl von auf der Oberfläche (105) des Koppler-Trägerkörpers (116) angeordneten, elektrischen Leitern (115)
eine photonische Vorrichtung (114), die an der Oberfläche befestigt ist und einen Arbeitsabschnitt (118) besitzt, wobei die photonische Vorrichtung (114) einen Kontakt (106) umfasst, der mit wenigstens einem der Mehrzahl elektrischer Leiter (115) des Koppler-Trägerkörpers (116) elektrisch verbunden ist, und
einen optischen Formbereich (112), der die photonische Vorrichtung (114) kapselt, wobei der optische Formbereich (112) eine äußere Oberfläche (120) bildet, die darin eingeformte Ausrichtungsvorrichtungen (117) besitzt, wobei die Ausrichtungsvorrichtungen (117) gleichzeitig mit dem optischen Bereich (112) geformt wurden, wodurch für eine genaue Ausrichtung des optischen Bereichs (112) gesorgt ist, wodurch für eine genaue Ausrichtung der Ausrichtungsvorrichtungen (117) zueinander und zu der Oberfläche (120) gesorgt ist, wobei weiterhin ein Abstand h (122) zwischen der äußerern Oberfläche (120) und dem Arbeitsbereich (113) der photonischen Vorrichtung (114) vorgesehen ist, um Licht (119) zwischen der photonischen Vorrichtung (114) und der äußeren Oberfläche (120) des optischen Formbereichs (112) zu leiten, wobei der Abstand (h) **durch** folgende mathematische Ungleichung bestimmt ist:

$$h \leq \frac{x - \frac{d}{2}}{\tan\theta_{2c}},$$

wo h gleich dem Abstand (122) zwischen der Oberfläche (120) und dem Arbeitsbereich (118) ist, wo d gleich einer Breite des Arbeitsbereichs ist, wo x gleich der Hälfte einer gewünschten Lichtpunktgröße ist und wo $\theta_{2c}$ unter Verwendung des Brechungsindexes des optischen Formbereichs bestimmt ist und die folgende mathematische Ungleichung erfüllt:

$$\theta_{2c} \leq \sin^{-1}\left[\frac{n_3}{n_4}\cos\left(\sin^{-1}\left(\frac{n_2}{n_3}\right)\right)\right],$$

wo n3, n2 und n4 Brechungsindizes des Kernbereichs (104), des Mantelbereichs (107) bzw. des optischen Formbereichs (112) sind und damit $\theta_{2c}$ bestimmen.

2. Optoelektronische Koppeleinheit nach Anspruch 1, weiter **dadurch gekennzeichnet, dass** die photonische Vorrichtung (114) ein optischer Transmitter ist.

3. Optoelektronische Koppeleinheit nach Anspruch 2, weiter **dadurch gekennzeichnet, dass** der optische Transmitter ein VCSEL ist.

4. Optoelektronische Koppeleinheit nach Anspruch 2, weiter **dadurch gekennzeichnet, dass** der optische Transmitter eine LED ist.

5. Optoelektronische Koppeleinheit nach Anspruch 1, weiter **dadurch gekennzeichnet, dass** die photonische Vorrichtung (114) ein optischer Empfänger ist.

6. Optoelektronische Koppeleinheit nach Anspruch 5, weiter **dadurch gekennzeichnet, dass** der optische Empfänger eine Photodiode ist.

7. Optoelektronische Koppeleinheit nach Anspruch 6, weiter **dadurch gekennzeichnet, dass** die Photodiode eine p-i-n-Photodiode ist.

8. Optoelektronische Koppeleinheit nach Anspruch 1, weiter **dadurch gekennzeichnet, dass** der Koppler-Trägerkörper (116) weiter eine integrierte Schaltung umfasst, die betriebsmäßig mit den elektrischen Leitern verbunden ist.

**9.** Optoelektronische Koppeleinheit nachn Anspruch 1, weiter **dadurch gekennzeichnet, dass** sie umfasst:

einen optischen Verbinder (101), der eine optische Faser (103) mit einem Kernbereich (104) und einem Mantelbereich (107) aufweist.

## Revendications

**1.** Interface optoélectronique destinée à une fibre possédant une région de coeur (104) et une région de confinement, **caractérisée par** :

un substrat d'interconnexion (116) comportant une surface (105) sur laquelle une pluralité de tracés électriques (115) sont disposés ;
un dispositif optoélectronique (114) qui est monté sur ladite surface et comporte une partie de travail (118), le dispositif optoélectronique (114) comportant un contact (106) qui est électriquement connecté à au moins un tracé de la pluralité de tracés électriques (115) du substrat d'interconnexion (116) ; et
une partie optique moulée (112) qui encapsule le dispositif optoélectronique (114), la partie optique moulée (112) formant une surface extérieure (120) dans laquelle sont moulés des dispositifs d'alignement (117), les dispositifs d'alignement (117) étant moulés en même temps que la région optique (112), si bien qu'il est produit un alignement précis de la partie optique (112), ce qui produit un alignement précis des dispositifs d'alignement (117) les uns avec les autres et avec la surface (20), et comportant en outre une distance h (122) entre la surface externe (120) et la partie de travail (113) du dispositif optoélectronique (114) servant à diriger la lumière (119) entre le dispositif optoélectronique (114) et la surface externe (120) de la partie optique moulée (112), où la distance h est déterminée par l'inégalité mathématique :

$$ h \leq \frac{x - \frac{d}{2}}{tg\,\theta_{2c}} $$

où h est égal à la distance (122) entre la surface (105) et la partie de travail (118), où d est égal à la largeur de la partie de travail, où x est égal à la moitié d'une dimension de tache voulue, et où $\theta_{2c}$ est déterminé au moyen de l'indice de réfraction de la partie optique moulée, $\theta_{2c}$ satisfaisant l'inégalité mathématique suivante :

$$ \theta_{2c} \leq \arcsin\left[\frac{n_3}{n_4}\cos\left(\arcsin\left(\frac{n_2}{n_3}\right)\right)\right] $$

où $n_3$, $n_2$ et $n_4$ sont respectivement les indices de réfraction de la région de coeur (104), de la région de confinement (107) et de la partie optique moulée (112), si bien qu'on détermine $\theta_{2c}$.

**2.** Interface optoélectronique selon la revendication 1, **caractérisée en outre par le fait que** le dispositif optoélectronique (114) est un émetteur optique.

**3.** Interface optoélectronique selon la revendication 2, **caractérisée en outre par le fait que** l'émetteur optique est un laser à émission en surface à cavité verticale, noté VCSEL.

**4.** Interface optoélectronique selon la revendication 2, **caractérisée en outre en ce que** l'émetteur optique est une diode d'émission de lumière, notée LED.

**5.** Interface optoélectronique selon la revendication 1, **caractérisée en outre par le fait que** le dispositif optoélectronique (114) est un récepteur optique.

**6.** Interface optoélectronique selon la revendication 5, **caractérisée en outre par le fait que** le récepteur optique est une photodiode.

**7.** Interface optoélectronique selon la revendication 6, **caractérisée en outre par le fait que** la photodiode est une photodiode p-i-n.

**8.** Interface optoélectronique selon la revendication 1, **caractérisée en outre par le fait que** le substrat d'interconnexion (116) comporte en outre un circuit intégré fonctionnellement connecté aux tracés électriques.

**9.** Interface optoélectronique selon la revendication 1, **caractérisée en outre en ce qu'**elle comprend un connecteur optique (101) possédant une fibre optique (103) dotée d'une région de coeur (104) et d'une région de confinement (107).

FIG. 1

FIG. 2

EP 0 635 741 B1

# FIG. 3